(19) Europäisches Patentamt

European Patent Office

Office européen des brevets

(11) Veröffentlichungsnummer: **0 517 106 A1**

(12) **EUROPÄISCHE PATENTANMELDUNG**

(21) Anmeldenummer: **92109019.7**

(22) Anmeldetag: **29.05.92**

(51) Int. Cl.⁵: **H04N 9/79**, H04N 9/88

(30) Priorität: **07.06.91 DE 4118673**

(43) Veröffentlichungstag der Anmeldung:
**09.12.92 Patentblatt 92/50**

(84) Benannte Vertragsstaaten:
**PT**

(71) Anmelder: **Deutsche Thomson-Brandt GmbH
Hermann-Schwer-Strasse 3 Postfach 1307
W-7730 Villingen-Schwenningen(DE)**

(72) Erfinder: **Dumont, Frank
Hornberger Strasse 4
W-7730 Villingen-Schwenningen(DE)**
Erfinder: **Rauser, Horst W.
An der Kapelle 1
W-7730 Villingen-Schwenningen(DE)**

(54) **Videorecorder.**

(57) 2.1. Ein VHS-Videorecorder enthält im Wiedergabeweg einen Kammfilter mit einer Zweizeilen-Verzögerungsleitung zur Verringerung von Farbübersprechen. Durch die Verzögerung Zweizeilen entstehen bei der Wiedergabe im Bild Farbverfälschungen,
insbesondere bei Übergängen Schwarz/Schweiz-
Farbe in Vertikalrichtung. Aufgabe ist es, mit geringen Schaltungsaufwand derartige Störungen zu verringern.

2.2. Eine an sich bei der Wiedergabe verwendete Zeilen-Verzögerungsleitung zur Störunterdrük-
kung oder Dropout-Kompensation wird bei Aufnahmebetrieb in den Weg des Leuchtdichtesignals (Y)
eingeschaltet.

2.3. Insbesondere VHS-Videorecorder

FIG. 1

Die Erfindung geht aus von einem Videorecorder gemäß dem Oberbegriff des Anspruchs 1.

Ein derartiger Videorecorder enthält im Wiedergabeweg des Farbträgers ein Kammfilter mit einer Zweizeilen-Verzögerungsleitung. Dieses Kammfilter bewirkt auf Grund einer bei der Aufnahme vorgenommenen periodischen Phasenumschaltung des Farbträgers in jedem zweiten Halbbild eine Kompensation des Übersprechens aus benachbarten Spuren. Die Verzögerung um zwei Zeilen ist notwendig, weil wegen der zeilenfrequenten PAL-Phasenumschaltung nur jeweils Farbträger aus der Zeile n und der Zeile n + 2 addiert werden dürfen. Durch das Kammfilter wird somit der Farbträger bei der Wiedergabe um zwei Zeilen verzögert. Das bedeutet, daß bei der Wiedergabe die Farbsignale und das Leuchtdichtesignal auf dem Bildschirm zeitlich nicht übereinstimmen. Dadurch ergeben sich im wiedergegebenen Bild Farbverfälschungen, insbesondere bei Übergängen von Schwarz/Weiß auf Farbe oder von Farbe auf Schwarz/Weiß in vertikaler Richtung. Bei einem Testbild mit einem waagerechten schwarzen Balken und darunter anschließenden senkrechten Farbbalken ist z.B. bei Beginn der Farbbalken das Leuchtdichtesignal bereits vorhanden, während das Farbsignal durch die Zweizeilenverzögerung fehlt. Das bedeutet, daß der Beginn der Farbbalken nicht richtig farbig wiedergegeben wird. An dieser Stelle erscheinen über die Breite von etwa zwei Zeilen an Stelle der gesättigten Farben graue waagerechte Streifen.

Der Erfindung liegt die Aufgabe zugrunde, derartige Bildfehler bei der Wiedergabe mit geringen Aufwand zu beseitigen. Diese Aufgabe wird durch die im Anspruch 1 angegegene Erfindung gelöst. Vorteilhafte Weiterbildungen der Erfindung sind in den Unteransprüchen angegeben.

Bei der Erfindung wird also die Zeilenverzögerungsleitung, die bei Wiedergabebetrieb zur Störunterdrückung und Dropout-Kompensation dient, bei Aufnahmebetrieb in den Weg des Leuchtdichtesignals eingeschaltet.

Die Erfindung beruht auf folgenden Erkenntnissen und Überlegungen. Die Zeilenverzögerungsleitung im Wiedergabeweg zur Störunterdrückung und Dropout-Kompensation ist keine bei einer bestimmten Frequenz arbeitende Glasleitung, sondern eine CCD-Leitung, in der Videosignale mit einem Frequenzbereich von etwa 0 - 3 MHz verzögert werden können. Diese CCD-Leitung bietet somit die Möglichkeit, bei der Aufnahme das Leuchtdichtesignal um eine Zeile zu verzögern. Die Erfindung besteht dabei in zwei vorteilhaften Schritten. Der erste Schritt besteht im folgenden: Um die genannten Bildfehler zu beseitigen, müßte an sich das Leuchtdichtesignal bei der Wiedergabe ebenfalls verzögert werden. Diese an sich bei der Wiedergabe notwendige Verzögerung wird nun auf die Aufnahmeseite verlegt. Dies ist möglich, weil es für die Wiedergabe gleichgültig ist, an welcher Stelle das Leuchtdichtesignal gegenüber den Farbsignalen verzögert worden ist. Dieser erste Schritt ermöglicht nunmehr den zweiten Schritt. Der zweite Schritt besteht darin, die für die Wiedergabe vorgesehene und bei der Aufnahme nicht benötigte Verzögerungsleitung nunmehr in vorteilhafter Weise bei der Aufnahme einzusetzen. Der Verzögerungsleitung, die bisher bei der Aufnahme unbenutzt blieb, wird also im Aufnahmebetrieb eine zusätzliche Funktion zugeteilt. Die Verzögerungsleitung erfüllt dann insgesamt drei Funktionen, nämlich die störunterdrückung und Dropout-Kompensation bei der Wiedergabe und die Verzögerung des Leuchtdichtesignals bei der Aufnahme. Durch die Verlegung der Verzögerung des Leuchtdichtesignals von der Wiedergabe in die Aufnahme und die Ausnutzung der bei der Aufnahme nicht benötigten Verzögerungsleitung für einen neuen Zweck wird also die gestellte Aufgabe praktisch ohne Mehraufwand gelöst. Es ist lediglich notwendig, bei Aufnahmebetrieb die Verzögerungsleitung von dem Wiedergabeweg in den Aufnahmeweg umzuschalten.

Ein weiterer Vorteil besteht darin, daß mit einem erfindungsgemäßen Recorder aufgenommene Bänder auch auf Recordern ohne die erfindungsgemäße Maßnahme die Beseitigung der Bildfehler bewirken, da die Verzögerung des Leuchtdichtesignals in dem Band enthalten ist. Die erfindungsgemäße Korrekturmaßnahme ist also gewissermaßen auf dem Band "eingefroren".

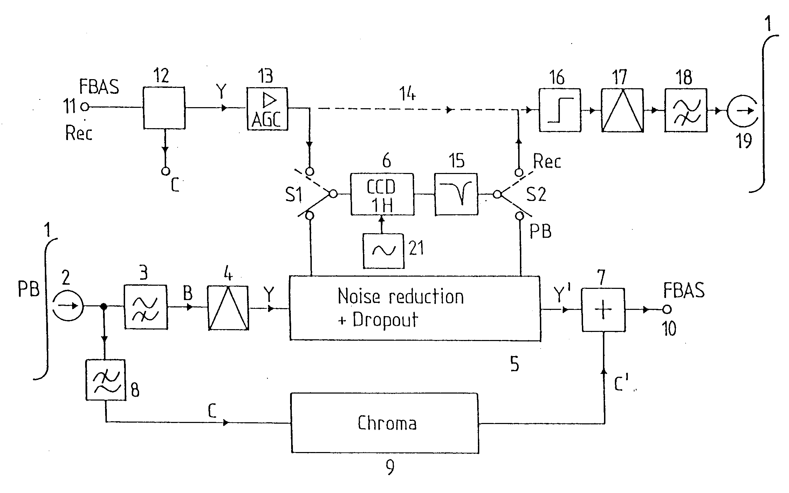

Die Erfindung wird im folgenden anhand der Zeichnung erläutert.

Die Figur zeigt für einen Videorecorder in vereinfachter Form den Aufnahmeweg Rec (Record) und den Wiedergabeweg PB (Playback). Bei der Wiedergabe liefert der das Magnetband 1 abtastende Kopf 2 den mit dem Leuchtdichtesignal frequenzmodulierten Bildträger B und den in der Frequenz herabgesetzten Farbträger C. Der Bildträger B wird mit dem Hochpaß 3 mit einer Grenzfrequenz von etwa 1 MHz ausgewertet und dem FM-Demodulator 4 zugeführt. Dieser liefert das Leuchtdichtesignal Y, das an die Schaltung 5 gelangt. Die Schaltung 5 bewirkt einerseits eine Vergrößerung des Signal-Störabstandes (noise canceler) durch Addition der Leuchtdichtesignale aus zwei zeitlich aufeinanderfolgenden Zeilen. Die Schaltung 5 bewirkt andererseits eine Dropout-Kompensation, bei der bei einem Dropout in das Leuchtdichtesignal das Signal der zeitlich vorangehenden Zeile eingefügt wird. Für beide Aufgaben wird eine Verzögerung um eine Zeilendauer benötigt. Zu diesem Zweck ist an die Schaltung 5 die CCD-Verzögerungsleitung 6 angeschlossen, die eine Verzögerung um die Dauer einer Zeile bewirkt. Die Verzögerungsleitung 6 ist als getakteter Speicher (CCD) ausgebildet und wird von dem Taktoszillator 21 mit einer Taktimpulsfolge von 13,3 MHz gesteuert. Das derart hinsichtlich Störabstand und Dropout aufbereitete Leuchtdichtesignal Y' gelangt auf die Addierstufe 7. Der Farbträger C wird mit dem Tiefpaß 8 mit einer Grenzfrequenz von etwa 1 MHz ausgewertet und gelangt auf die Chromastufe 9. In der Stufe 9 wird unter anderem die Frequenz des Farbträgers wieder auf die Normfrequenz hochgesetzt. Der derart in der Frequenz hochgesetzte Farbträger C' wird in der Addierstufe 7 dem Leuchtdichtesignal Y' hinzugefügt. An der Klemme 10 steht somit das vollständige FBAS-Signal für die Bildwiedergabe zur Verfügung.

Bei der Aufnahme Rec wird das FBAS-Signal an der Klemme 11 mit der frequenzselektiv arbeitenden Trennstufe 12 in das Leuchtdichtesignal Y und das Farbsignal C aufgespalten. Die Trennstufe 12 kann aus üblichen LC-Filtern bestehen oder als Kammfilter ausgebildet sein. Das Leuchtdichtesignal Y gelangt über den auch eine Schwundregelung (AGC) bewirkenden Verstärker 13 an sich über die gestrichelte Leitung 14, die Preemphasisstufe 16, den FM-Modulator 17 und den Hochpaß 18 mit einer Grenzfrequenz von 1 MHz auf den Magnetkopf 19 und wird mit diesem auf dem Magnetband 1 aufgezeichnet. Der Tiefpaß 15 mit einer Sperrstelle bei der Taktfrequenz von 13,3 MHz dient zur Unterdrückung der Taktfrequenz im Signal am Ausgang der CCD-Verzögerungsleitung 6. Die Aufzeichnung des Farbsignals C in Form eines Trägers auf derselben Spur oder einer getrennten Spur des Magnetbandes 1 ist zur Vereinfachung nicht näher erläutert. Die soweit beschriebene Schaltung ist bekannt.

Bei Wiedergabebetrieb PB arbeitet die CCD-Verzögerungsleitung 6 in der beschriebenen Weise. Sie ist dabei über die Schalter S1, S2 an Eingänge der Schaltung 5 angeschlossen. Bei Aufnahmebetrieb Rec ist die an sich ungenutzt bleibende Verzögerungsleitung 6 durch die Schalter S1, S2 zwischen den Ausgang des Verstärkers 13 und den Eingang der Preemphasisstufe 16 geschaltet. Das Leuchtdichtesignal Y wird dadurch bei der Aufnahme um eine Zeilendauer verzögert.

Es ist ebenso möglich, das Leuchtdichtesignal Y bei der Aufnahme um zwei Zeilen zu verzögern, wenn der Wiedergabeweg eine Verzögerung für zwei Zeilen aufweist.

**Patentansprüche**

1. Videorecorder mit einem Wiedergabeweg (PB) für das Leuchtdichtesignal (Y) mit einer Zeilenverzögerungsleitung (6) zur Störunterdrückung und/oder Dropout-Kompensation und einem Wiedergabeweg für das Farbsignal mit einem Kammfilter mit einer Zweizeilen-Verzögerungsleitung zur Kompensation von Farbübersprechen, **dadurch gekennzeichnet**, daß die Zeilenverzögerungsleitung (6) bei Aufnahmebetrieb (Rec) in den Weg des Leuchtdichtesignals (Y) eingeschaltet ist.

2. Recorder nach Anspruch 1, **dadurch gekennzeichnet**, daß die Zeilenverzögerungsleitung (6) eine CCD-Leitung ist.

3. Recorder nach Anspruch 1, **dadurch gekennzeichnet**, daß die Zeilenverzögerungsleitung (6) im Aufnahmebetrieb (Rec) vor der Preemphasis-Schaltung (16) liegt.

4. Verfahren nach Anspruch 1, **dadurch gekennzeichnet**, daß die Zeilenverzögerungsleitung (6) eine Verzögerungszeit von mehreren Zeilen hat.

EP 0 517 106 A1

FBAS

11 o— 12 Y 13 AGC 14 16 17 18 19

Rec

C

S1 6 CCD 1H 15 Rec S2 PB

21

1

PB 2 3 B 4 Y Noise reduction + Dropout Y' 7 FBAS 10

8 5

C Chroma C'

9

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | GB-A-2 099 658 (HITACHI LTD)<br>* das ganze Dokument *<br>--- | 1,2,4 | H04N9/79<br>H04N9/88 |
| Y | US-A-4 355 333 (I.SATO)<br>* das ganze Dokument *<br>--- | 1,2,4 | |
| A | DE-A-4 000 790 (HITACHI LTD)<br>* Spalte 5, Zeile 52 - Spalte 7, Zeile 68 *<br>--- | 1,2,4 | |
| A | IEEE TRANSACTIONS ON CONSUMER ELECTRONICS.<br>Bd. 36, Nr. 3, 30. August 1990, NEW YORK US<br>Seiten 560 - 565;<br>T.MATSUMOTO ET AL: 'All Digital Video Processing System for S-VHS VCR'<br>* das ganze Dokument *<br>--- | 1-4 | |
| A | US-A-5 014 118 (M.SHIRAI)<br>* das ganze Dokument *<br>--- | 1,2,4 | |
| A | EP-A-0 361 819 (SONY CORPORATION)<br>* das ganze Dokument *<br>--- | 1,2,4 | RECHERCHIERTE SACHGEBIETE (Int. Cl.5) |
| A | US-A-4 809 085 (T.FUNAHASHI)<br>* das ganze Dokument *<br>--- | 1,2,4 | H04N |
| A | US-A-4 737 862 (T.KOGA)<br>* das ganze Dokument *<br>--- | 1,2,4 | |
| P,A | US-A-5 047 866 (K.WATANABE ET AL)<br>* das ganze Dokument *<br>----- | 1,2,4 | |

Der vorliegende Recherchenbericht wurde für alle Patentansprüche erstellt

| Recherchenort | Abschlußdatum der Recherche | Prüfer |
|---|---|---|
| DEN HAAG | 14 SEPTEMBER 1992 | VERSCHELDEN J. |